# EUROPEAN PATENT SPECIFICATION

(11) **EP 1 069 322 B1**
(45) Date of publication and mention of the grant of the patent: **14.02.2007**
(21) Application number: 00305304.8
(22) Date of filing: 23.06.2000
(51) Int. Cl.: F15B 13/04, F15B 15/28

(54) **Directional control valve having position detecting function**
Wegeventil mit Positionsermittlung
Distributeur pneumatique avec détection de la position

(30) Priority: 14.07.1999 JP 20050099
(43) Date of publication of application: 17.01.2001
(73) Proprietor: SMC CORPORATION, Minato-ku, Tokyo (JP)
(72) Inventor: Hayashi, Bunya, SMC Corp. Tsukuba Tech. Center, Tsukuba-gun, Ibaraki (JP); Ishikawa, Makoto, SMC Corp. Tsukuba Tech. Center, Tsukuba-gun, Ibaraki (JP)
(74) Representative: Findlay, Alice Rosemary

(56) References cited:
- EP-A- 0 366 605
- EP-A- 0 800 003
- WO-A-92/16756
- JP-A- 54 111 126
- JP-U- 2 066 784
- JP-U- 2 088 079
- PATENT ABSTRACTS OF JAPAN vol. 017, no. 063 (C-1024), 8 February 1993 (1993-02-08) -& JP 04 269978 A (NOHMI BOSAI), 25 September 1992 (1992-09-25)

## Description

The present invention relates to a directional control valve having a position detecting function capable of detecting operating positions of a valve member such as a spool.

A directional control valve capable of detecting the operating position of a spool is well known and is disclosed in, for example, Japanese Unexamined Utility Model Publication No. 2-66784. This known directional control valve is provided with a magnet on the outer periphery of a spool and a magnet sensor on a casing. This directional control valve is arranged so that, when the spool moves to one changeover position, the magnet approaches the magnetic sensor, and the magnetic sensor is turned on, and, when the spool moves to the other changeover position, the magnet moves away from the magnetic sensor, and the magnetic sensor is turned off. Thus, this directional control valve detects that the spool has been changed over by the on/off of the magnetic sensor.

However, since the magnet is installed in the above-described conventional control valve at a position on the outer periphery of the spool situated in the fluid passage, the magnet directly contacts the hydraulic fluid. Therefore, when the fluid contains water, chemical mist, particulates of magnetic material such as metallic powder, or the like, there has often arisen the problem that the contact of the magnet with these substances makes the magnet rust, corrode, or adsorb the particulates, thereby bringing about the problems of reducing detection accuracy due to the decrease in magnetic force, or causing poor sliding conditions.

Furthermore, although the position of the spool situated at a stroke end can be detected by detecting the magnet, the directional control valve cannot detect any position of the spool along a stroke. Therefore, even if the spool makes an irregular unsmooth movement due to some abnormality, it can not detect this abnormality. This has made it difficult to take suitable precautions against a failure or an accident before they happen, and so has presented problems for maintenance and management.

In addition, the magnetic sensor for detecting the magnet is generally arranged so as to be turned on when the magnetic flux density is above a fixed value, and to be turned off when it is below another fixed value. Therefore, during the driving stroke of the spool, if the magnetic flux density becomes higher than the fixed value due to the approach of a magnet, the magnetic sensor is turned on even before the spool arrives at a stroke end, and conversely, during the return stroke of the spool, if the magnetic flux density becomes lower than the other fixed value due to the moving-away of the magnet, the magnetic sensor is turned off even before the spool arrives at the return-stroke end. Therefore, even if the spool stops on the spot for some reason at the instant when the magnetic sensor is turned on or turned off, the magnetic sensor only outputs an on/off signal notifying that the spool has been completely changed over. It is thus impossible for conventional magnetic sensors to detect an abnormality.

WO92/16756 discloses a proportional mechanical actuator for a device linearly controllable by a pressure fluid, the actuator being intended to be connected between a pressure source and the device to be controlled, comprising a proportional magnet; a pilot control spindle arranged to be movable in a pilot control body by the proportional magnet for opening and closing different pressure fluid conduits; a positioner for the device, the positioner being linearly controllable in two directions by the pilot control spindle so that the spindle tends to keep the positioner at each particular moment in a predetermined position corresponding to a control signal supplied by an electrical control spindle or other similar external coupling device of the actuator. A position sensor electrically sensing the position of the positioner is provided in a substantially cylindrical means defining a space where the positioner moves, the position sensor comprising a winding fitted around the means.

EP-A-0366605, which represents the closest prior art, discloses a valve where an integral rod extends from the valve member and carries a magnet on the other end. Movement of the valve member moves the magnet with respect to an induction coil and causes generation of an induced voltage or current in the induction coil.

A directional control valve of the present invention comprises a double-pilot type directional control valve having a position detecting function, comprising a casing having a plurality of ports and a valve hole into which each of the ports is opened, a valve member for changing over flow passages between the ports, the valve member being slidably received in the valve hole, driving means comprising two pilot valves installed in the casing for changing over said valve member under the action of pilot fluid pressure, a detection coil, a detection head movable in synchronisation with the valve member, and a signal processing circuit for detecting the operating position of the valve member, characterised in that the driving means comprises two pistons, the pistons being disposed on the end sides of the valve member; in that the pilot valves are installed in the casing at the end of a first of the pistons; in that the detection coil is for generating an alternating magnetic field; in that the detection coil and the signal processing circuit are disposed on a non-magnetic portion of the casing which forms an end of the casing and which receives the second piston; in that the detection coil is disposed on the non-magnetic portion at a position adjacent to the second piston; in that the detection head is for changing the impedance of the detection coil by moving relative to the detection coil; in that the detection head comprises a member of smaller cross-sectional area than the second piston and is installed at the centre of the pressure receiving surface of the second piston; in that the signal processing circuit is for applying an alternating voltage to the detection coil and detecting the operating position of the valve member from the change in the impedance of the detection coil, and in that the signal processing circuit is disposed on an end face of the non-magnetic portion and covers the detection coil.

In the directional control valve having the above-described features, when the detection head moving in synchronisation with the valve member approaches or moves away from the detection coil, the impedance of the detection coil changes in response to the distance from the detection head, so that the operating position can be detected from this change in impedance. It is therefore possible to discriminate whether the valve member has operated normally or not, from the relationship between the operating position and the operating time, and thus to take suitable precautions against a failure or an accident before they happen.

Since there is no need to dispose a magnet in a hydraulic fluid flow passage as is conventional in the art, even if the hydraulic fluid is at a high temperature or contains water, chemical mist, magnetic particles such as metallic powders, or the like, it is unnecessary to take countermeasures against rusting or corroding, adsorption of magnetic particles, reduction in magnetic force, change in temperature, etc. This permits the achievement of a simple, long-life, and high-reliability directional control valve.

In accordance with one preferable embodiment, the detection coil is a high-frequency coil for generating a high-frequency magnetic field, and the detection head is formed of metal. Alternatively, the detection coil is a low-frequency coil for generating a low-frequency magnetic field, and the detection head is a magnetic body adapted to be taken in and out of the hollow portion of the coil by the movement of the piston.

The invention will now be further described by way of example with reference to the accompanying drawings in which:
Fig. 1 is a longitudinal section view of a first embodiment of the directional control valve in accordance with the present invention.
Fig. 2 is an enlarged view showing the main section of Fig. 1.
Fig. 3 is a longitudinal sectional view showing the main section of a second embodiment of the present invention.

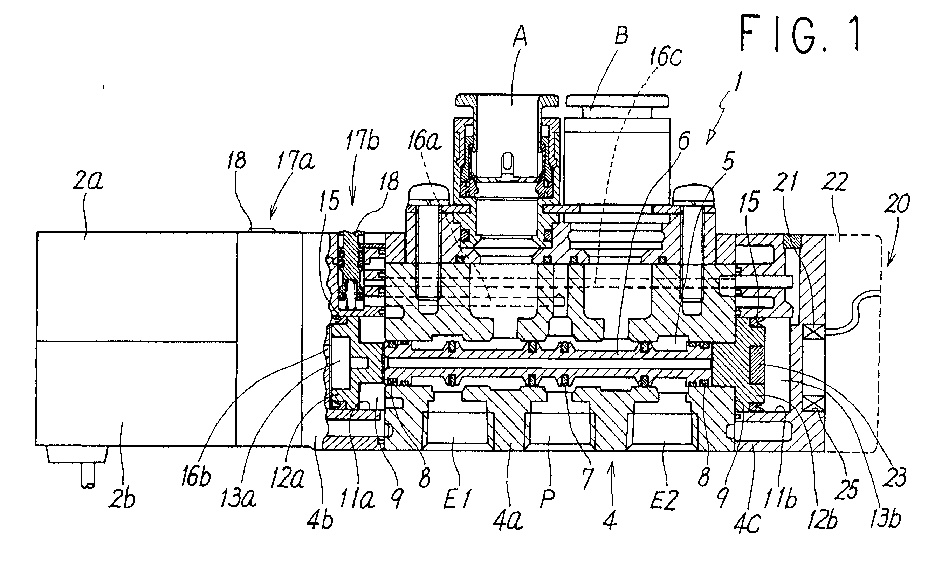

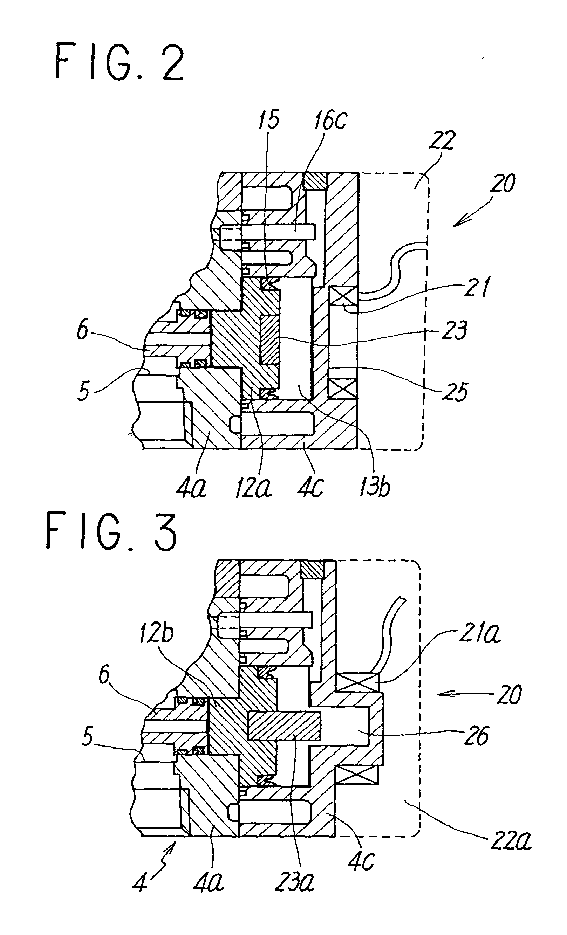

Figs. 1 and 2 show the first embodiment of the directional control valve in accordance with the present invention. The directional control valve here exemplified is a double-pilot type directional control valve wherein a main valve 1 is changed over by two pilot valves 2a and 2b.

The main valve 1 has a construction as a 5-port valve, and includes a casing 4. The casing 4 comprises a first member 4a of cuboid shape, a second member 4b which is connected to the one end of the first member 4a and which also serves as an adapter for concentratedly mounting the two pilot valves 2a and 2b, and a third member 4c which is connected to the other end of the first member 4a and which functions as an end cover. Here, at lease the third member is formed of non-magnetic material.

A supply port P and two discharge ports E1 and E2 are provided on either of the upper and lower surfaces of the first member 4a, and two output ports A and B are provided on the other surface. Inside the first member 4a, there is provided a valve hole 5 to which these ports are each opened being arranged in the axial direction. In the valve hole 5, there is slidably received a spool 6 which is a valve member for changing over flow passages.

On the outer periphery of the spool 6, there are provided a plurality of sealing members 7 for mutually defining flow passages connecting the above-mentioned ports, and on the outer peripheries of both ends of the spool 6, there are provided end sealing members 8 for shutting off the breathing chambers 9 facing the ends of the spool 6, from some flow passages.

On the other hand, in the second member 4b and the third member 4c, the piston chamber 11a and 11b are formed, respectively, at the positions facing both ends of the spool 6, and pistons 12a and 12b are slidably received in the respective piston chambers 11a and 11b, each abutting against respective end faces of the spool 6.

On the back sides of the pistons 12a and 12b, that is, at portions adjacent to the pressure receiving surfaces opposite to the end faces of the pistons abutting against the spool 6, pilot pressure chambers 13a and 13b are formed, respectively. Between the pistons 12a and 12b, and the end faces of the spool 16, there are formed breathing chambers 9 and 9 which are opened to the outside, respectively. The pressure chambers 13a and 13b are hermetically shut off from the breathing chambers 9 and 9 by piston packing 15 and 15 mounted on the outer peripheries of the piston 12a and 12b, respectively.

The first pressure chamber 13a situated adjacent to the first piston 12a communicates with the supply port P through the pilot fluid passages 16a and 16b via a first pilot valve 2a and a first manual operating mechanism 17a, while the second pressure chamber 13b situated adjacent to the second piston 12b communicates with the supply port P through the pilot fluid passages 16a and 16c via a second pilot valve 2b and a second manual operating mechanism 17b.

When the first pilot valve 2a is in the "off" state, and at the same time when the second pilot valve 2b is in the "on" state, the pilot fluid in the first pressure chamber 13a is discharged and it is supplied to the second pressure chamber 13b, so that the spool 6 is pushed by the second piston 12b, and occupies a first changeover position shifted to the left side, as shown in Fig. 1. Once the first pilot valve 2a is turned "on", and at the same time the second pilot valve 2b is turned "off", the pilot fluid in the second pressure chamber 13b is discharged and it is supplied to the first pressure chamber 13, so that the spool 6 is pushed by the first piston 12a, and occupies a second changeover position shifted to the right side.

The above-mentioned manual operating mechanisms 17a and 17b are adapted to directly connect the pilot fluid passages 16a with 16b, or 16a with 16c by depressing an operating element 18, and to thereby make the pressure chambers 13a and 13b communicate with the supply port P. This operating state is the same as that in which the pilot valves 2a and 2b are both "on".

The above-described pilot valves 2a and 2b are an electromagnetically operated solenoid valve for opening/closing a pilot fluid passage by energizing a solenoid. Since its constitution and operation are the same as the known one, specific explanation thereof is omitted.

The above-described directional control valve has the above-mentioned position detecting mechanism 20 for detecting operating positions of the spool 6, disposed at the end portion opposite to the side where the two pilot valves 2a and 2b of the casing 4 is mounted. The position detecting mechanism 20 comprises a detection coil 21 for generating an alternating magnetic field and a signal processing circuit 22, disposed on the third member 4c of the casing 4, and the detection head 23 formed on the piston 12b.

The detection coil 21 is disposed so as to be coaxial with the second piston 12b in a housing 25 formed on the outer surface of the third member 4c, and generates a high frequency magnetic field toward the piston chamber 11b.

On the other hand, the detection head 23 is formed of metallic member installed at the central portion of the pressure receiving surface of the second piston 12b, and is adapted to change the impedance of the detection coil 21 by approaching or moving away from the detection coil 21 in the alternating magnetic field. If the second piston 12b is formed of metal, the second piston 12b serves as a detection head in itself, and consequently there is no need to install such a metallic member separately.

The above-described signal processing circuit 22 applies an alternating voltage to the detection coil 21, detects operating positions of the piston 12b (spool 6) from the change in impedance of the detection coil 21, and outputs the detection signal toward a controller (not shown). As circuits required to achieve these, the signal processing circuit 22 incorporates a oscillating circuit, detecting circuit, an outputting circuit, or the like. Although the signal processing circuit 22 may be disposed at a position other than the position where the directional control valve is disposed, it is preferable to be disposed together with the detection coil 21 at a suitable position on the casing 4 of the directional control valve, as shown in drawings.

In the above-described position detection mechanism 20, when the detection head 23 approaches the detection coil 21 by the movement of the second piston 12b from the position shown in Fig. 1 to the second changeover position on the right side, the impedance of the detection coil 21 gradually increases in response to the distance from the detection head 23, and conversely, when the detection head 23 moves away from the detection coil 21 by the return of the second piston 12b to the first changeover position, the impedance of the detection coil 21 gradually decreases. From the change in impedance of the detection coil, therefore, operating positions of the second piston 12b, and consequently those of the spool 6 can be detect over the whole stroke. Herein, by previously inputting to the signal processing circuit 22 data such as relations between the normal operating position of the spool 6 and the operating time, or the maximum permissible limit of the operating time necessary to move to a specified position, and comparing the detected results with these data, it is possible to discriminate whether the operation of the spool has been normal or abnormal. This permits taking countermeasures against a failure or an accident before they happen.

Also, by disposing the detection coil 21 and the signal processing circuit 22 on the third member 4c of the casing 4, the repair or exchange thereof at failure becomes easier, and in some cases they may be exchanged as a whole, whereby the ease of maintenance is improved.

Here, the operating positions, the operating times, etc. of the spool 6 which have been detected can be displayed on a display device in the form of numeral values or graphs.

Fig. 3 shows the main section of the second embodiment of the directional control valve in accordance with the present invention. In this directional control valve, the position detection mechanism 20 comprises a detection coil 21a for generating a low-frequency magnetic field, a detection head 23 which changes the impedance of the detection coil 21a and which is formed of magnetic material, and a signal processing circuit 22 which applies an low-frequency alternating voltage to the detection coil 21a and which detects operating positions of the spool 6 from the change in impedance of the detection coil 21a.

The above-described detection coil 21a is disposed on the forth member 4c of the casing 4, formed of non-magnetic material, so that a hollow portion 26 communicating with the piston chamber 11b is formed in the detection coil 21a. On the other hand, the detection head 23 is formed of bar-like material having a smaller diameter than the piston 12b, and is installed so as to protrude in the axial direction through the center portion of the pressure receiving surface of the piston 12b. The detection head 23 is constituted so as to increase and decrease the impedance of the detection coil 21a when it is taken in and taken out of the above-mentioned hollow portion 26 in accordance with the displacement of the piston 12b.

Since constitutions, operations, effects, and preferable modifications of the second embodiment other than the foregoing are substantially the same as those of the first embodiment, description thereof is omitted.

As described hereinbefore in detail, in accordance with the present invention, without using a magnet and a magnetic sensor as in the conventional art, it is possible to detect the operating positions over the whole stroke of the valve member, by utilizing the property that the impedance of a detection coil changes when a detection head approaches or moves away from the detection coil generating a alternating magnetic field. This makes it possible to discriminate whether the valve member has normally operated or not, from the relations between the operating position and the operating time, and thereby to take suitable countermeasures against a failure or an accident before they happen.

## Claims

1. A double-pilot type directional control valve (1) having a position detecting function, comprising a casing (4) having a plurality of ports (P, E₁, E₂, A, B) and a valve hole into which each of the ports is opened, a valve member (6) for changing over flow passages between the ports, the valve member being slidably received in the valve hole, driving means comprising two pilot valves (2a, 2b) installed in the casing for changing over said valve member under the action of pilot fluid pressure, a detection coil (21, 21a), a detection head (23, 23a) movable in synchronisation with the valve member (6), and a signal processing circuit (22, 22a) for detecting the operating position of the valve member (6), **characterised in that** the driving means comprises two pistons (12a, 12b), the pistons (12a, 12b) being disposed on the end sides of the valve member (6); **in that** the pilot valves (2a, 2b) are installed in the casing (4) at the end of a first of the pistons (12a); **in that** the detection coil (21, 21a) is for generating an alternating magnetic field; **in that** the detection coil (21, 21 a) and the signal processing circuit (22, 22a) are disposed on a non-magnetic portion (4c) of the casing (4) which forms an end of the casing (4) and which receives the second piston (12b); **in that** the detection coil (21, 21a) is disposed on the non-magnetic portion (4c) at a position adjacent to the second piston (12b); **in that** the detection head (23, 23a) is for changing the impedance of the detection coil (21, 21a) by moving relative to the detection coil; **in that** the detection head (23, 23a) comprises a member of smaller cross-sectional area than the second piston (12b) and is installed at the centre of the pressure receiving surface of the second piston (12b); **in that** the signal processing circuit (22, 22a) is for applying an alternating voltage to the detection coil (21, 21a) and detecting the operating position of the valve member (6) from the change in the impedance of the detection coil, and **in that** the signal processing circuit (22, 22a) is disposed on an end face of the non-magnetic portion (4c) and covers the detection coil (21, 21a).

2. A directional control valve as claimed in Claim 1, wherein the detection coil is a high-frequency coil (21) for generating a high-frequency alternating magnetic field, the detection coil being disposed in a recess (25) formed in an end face of the casing (4) so as to be coaxial with the second piston (12b), and wherein the detection head (23) is a metallic member installed at the centre of the pressure receiving surface of the second piston (12b).

3. A directional control valve as claimed in Claim 1, wherein the detection coil is a low-frequency coil (21a) for generating a low frequency alternating magnetic field, the detection coil being disposed at an end portion of the casing (4) so as to be coaxial with the second piston (12b), and wherein the detection head is a bar (23a) of magnetic material which is installed at the centre of the pressure receiving surface of the second piston (12b) so as to protrude coaxially from the piston, the detection head (23a) being moved in and out of the detection coil (21a) by the movement of the second piston (12b).

## Patentansprüche

1. Wegeventil **(1)** mit Doppelsteuerung, das eine Positionsbestimmungsfunktion besitzt, umfassend ein Gehäuse **(4)** mit einer Vielzahl von Ports **(P, E₁, E₂, A, B)** und ein Ventilloch zu dem hin jeder der Ports geöffnet ist, ein Ventilelement **(6),** das gleitend im Ventilloch gelagert ist, zur Umsteuerung der Flusspassagen zwischen Ports, Antriebsmittel umfassend zwei Steuerventile **(2a, 2b)** installiert im Gehäuse für die Umsteuerung dieses Ventilelementes unter dem Einfluss von Steuerflüssigkeitsdruck, eine Detektorspule **(21, 21a),** einen Detektorkopf **(23, 23a)** der in Synchronisation mit dem Ventilelement **(6)** beweglich ist, und einen Signalverarbeitungskreis **(22, 22a)** für die Bestimmung der Betriebsposition des Ventilelementes **(6), dadurch gekennzeichnet, dass** die Antriebsmittel zwei Kolben **(12a, 12b)** umfassen, die Kolben **(12a, 12b)** sich an den Endseiten des Ventilelementes **(6)** befinden; dass die Steuerventile **(2a, 2b)** im Gehäuse **(4)** am Ende eines ersten Kolbens **(12a)** installiert sind; dass die Detektorspule **(21, 21a)** der Generierung eines magnetischen Wechselfeldes dient; dass die Detektorspule **(21, 21a)** und der Signalverarbeitungskreis **(22, 22a)** an einem nicht-magnetischen Teil **(4c)** des Gehäuses **(4)** angebracht sind, das ein Ende des Gehäuses **(4)** bildet und das den zweiten Kolben **(12b)** aufnimmt; dass sich die Detektorspule **(21, 21a)** an dem nicht-magnetischen Teil **(4c)** an einer Stelle befindet, die an den zweiten Kolben **(12b)** angrenzt; dass der Detektorkopf **(23, 23a)** der Änderung der Impedanz der Detektorspule **(21, 21a)** dient, indem er sich in Beziehung zur Spule bewegt; dass der Detektorkopf **(23, 23a)** ein Element mit kleinerem Flächenquerschnitt als der zweite Kolben **(12b)** beinhaltet und im Zentrum der Druck aufnehmenden Fläche des zweiten Kolbens **(12b)** installiert ist; dass der Signalverarbeitungskreis **(22, 22a)** dazu dient, eine Wechselspannung an die Detektorspule **(21, 21a)** abzugeben und die Betriebsposition des Ventilelementes **(6)** auf Grund der Änderung der Impedanz der Detektorspule zu bestimmen, und dass der Signalverarbeitungskreis **(22, 22a)** an einer Endfläche des nicht-magnetischen Teils **(4c)** angebracht ist und die Detektorspule **(21, 21a)** abdeckt.

2. Wegeventil nach Anspruch 1, worin die Detektorspule eine Hochfrequenzspule **(21)** zur Generierung eines hochfrequenten magnetischen Wechselfeldes ist, die Detektorspule sich in einer Vertiefung **(25),** die in eine Endfläche des Gehäuses **(4)** eingeformt ist, befindet, so dass sie koaxial zum zweiten Kolben **(12b)** befindlich ist, und worin der Detektorkopf **(23)** ein Metallelement ist , das im Zentrum der Druck aufnehmenden Fläche des zweiten Kolbens **(12b)** installiert ist.

3. Wegeventil nach Anspruch 1, worin die Detektorspule eine Niederfrequenzspule **(21a)** zur Generierung eines niederfrequenten magnetischen Wechselfeldes ist, die Detektorspule sich an einem Endteil des Gehäuses **(4)** befindet, so dass sie koaxial zum zweiten Kolben **(12b)** befindlich ist, und worin der Detektorkopf ein Stab **(23a)** aus magnetischem Material ist, der im Zentrum der Druck aufnehmenden Fläche des zweiten Kolbens **(12b)** installiert ist, so dass er koaxial über den Kolben hinausragt, der Detektorkopf **(23a)** durch die Bewegung des zweiten Kolbens **(12b)** in die Detektorspule **(21a)** hinein und aus ihr heraus bewegt wird.

## Revendications

1. Distributeur de commande d'orientation du type à pilote double (1) ayant une fonction de détection de la position, comportant un carter (4) ayant une pluralité d'orifices (P, E₁, E₂, A, B) ainsi qu'un trou de distributeur dans lequel chacun des orifices est ouvert, un organe de distributeur (6) permettant de permuter les passages d'écoulement entre les orifices, l'organe de distributeur étant reçu de manière coulissante dans le trou de distributeur, un moyen d'entraînement comportant deux distributeurs pilotes (2a, 2b) installés dans le carter afin de permuter ledit organe de distributeur sous l'effet de la pression du fluide pilote, une bobine de détection (21, 21a), une tête de détection (23, 23a) capable d'être déplacée en synchronisation avec l'organe de distributeur (6), et un circuit de traitement des signaux (22, 22a) permettant de détecter la position de fonctionnement de l'organe de distributeur (6), **caractérisé en ce que** le moyen d'entraînement comporte deux pistons (12a, 12b), les pistons (12a, 12b) étant disposés sur les côtés extrêmes de l'organe de distributeur (6) ; **en ce que** les distributeurs pilotes (2a, 2b) sont installés dans le carter (4) à l'extrémité d'un premier des pistons (12a) ; **en ce que** la bobine de détection (21, 21a) est destinée à générer un champ magnétique alternatif; **en ce que** la bobine de détection (21, 21 a) et le circuit de traitement des signaux (22, 22a) sont disposés sur une portion non magnétique (4c) du carter (4) qui forme une extrémité du carter (4) et qui reçoit le deuxième piston (12b) ; **en ce que** la bobine de détection (21, 21a) est disposée sur la portion non magnétique (4c) en une position adjacente au deuxième piston (12b) ; **en ce que** la tête de détection (23, 23a) est destinée à changer l'impédance de la bobine de détection (21, 21a) en se déplaçant par rapport à la bobine de détection ; **en ce que** la tête de détection (23, 23a) comporte un organe ayant une section inférieure par rapport au deuxième piston (12b) et est installée au centre de la surface de réception de la pression du deuxième piston (12b) ; **en ce que** le circuit de traitement des signaux (22, 22a) est destiné à appliquer une tension alternative sur la bobine de détection (21, 21a) et à détecter la position de fonctionnement de l'organe de distributeur (6) d'après le changement au niveau de l'impédance de la bobine de détection, et **en ce que** le circuit de traitement des signaux (22, 22a) est disposé sur une face extrême de la portion non magnétique (4c) et couvre la bobine de détection (21, 21 a).

2. Distributeur de commande d'orientation selon la revendication 1, dans lequel la bobine de détection est une bobine à haute fréquence (21) permettant de générer un champ magnétique alternatif à haute fréquence, la bobine de détection étant disposée dans un évidement (25) formé dans une face extrême du carter (4) de telle manière à être coaxiale par rapport au deuxième piston (12b), et dans lequel la tête de détection (23) est un organe métallique installé au centre de la surface de réception de pression du deuxième piston (12b).

3. Distributeur de commande d'orientation selon la revendication 1, dans lequel la bobine de détection est une bobine à basse fréquence (21a) permettant de générer un champ magnétique alternatif à basse fréquence, la bobine de détection étant disposée au niveau d'une portion extrême du carter (4) de telle manière à être coaxiale par rapport au deuxième piston (12b), et dans lequel la tête de détection est une barre (23a) constituée d'un matériau magnétique qui est installée au centre de la surface de réception de pression du deuxième piston (12b) de telle manière à dépasser de manière coaxiale par rapport au piston, la tête de détection (23a) étant déplacée dans et hors de la bobine de détection (21a) par le mouvement du deuxième piston (12b).
